# FASCICULE DE BREVET EUROPEEN

(11) **EP 3 707 796 B1**
(45) Date de publication et mention de la délivrance du brevet: **14.09.2022**
(21) Numéro de dépôt: 18785652.1
(22) Date de dépôt: 18.10.2018
(51) Int. Cl.: H02H 3/32, H02H 3/34

(54) **DISPOSITIF DE PROTECTION DIFFÉRENTIELLE AVEC FILTRAGE DE LA PORTEUSE DU SIGNAL D'EXCITATION**
DIFFERENZIALSCHUTZVORRICHTUNG MIT FILTERUNG DES TRÄGERS DES ERREGUNGSSIGNALS
DIFFERENTIAL PROTECTION DEVICE WITH FILTERING OF THE CARRIER OF THE EXCITATION SIGNAL

(30) Priorité: 07.11.2017 FR 1760427; 30.11.2017 FR 1761390
(43) Date de publication de la demande: 16.09.2020
(73) Titulaire: HAGER-ELECTRO SAS, 67210 Obernai (FR)
(72) Inventeur: JOYEUX, Patrice, 67140 Heiligenstein (FR); DOLISY, Bastien, 67210 Obernai (FR); SCHNEIDER, Michel, 67560 Rosheim (FR)
(74) Mandataire: Cabinet Nuss
(86) Numéro de dépôt international: PCT/EP2018/078490
(87) Numéro de publication internationale: WO 2019/091739

(56) Documents cités:
- WO-A1-2017/093670
- WO-A2-2017/072442
- US-A1- 2004 145 841

## Description

La présente invention concerne les équipements et systèmes de sécurité des biens et des personnes dans le domaine électrique, plus particulièrement les dispositifs de protection de personnes à courant différentiel résiduel (ou DDR), et a pour objet un dispositif de protection différentielle exploitant un signal de défaut filtré.

Les dispositifs de protection différentielle sont couramment intégrés dans des installations électriques domestiques ou tertiaires, en amont ou à l'entrée des diverses arborescences des circuits d'alimentation en place, voir au plus près des récepteurs auxquels ils sont respectivement affectés.

Typiquement, ces installations électriques sont alimentées par un réseau électrique alternatif, et des dispositifs de protection du type précité ont pour but d'assurer principalement la sécurité des personnes en détectant le plus rapidement possible toute fuite éventuelle vers la terre dans un des circuits ou récepteurs à protéger. De telles fuites sont par exemple causées par des contacts directs de sujets avec un conducteur non isolé ou des contacts indirects dus à des défauts de masse. Ces incidents électriques sont susceptibles de générer des accidents, parfois mortels, des détériorations de matériel(s), des départs d'incendie, des dysfonctionnements localisés ou généralisés ou analogues.

La protection différentielle, dans le contexte précité, s'effectue dans la plupart des cas d'une manière assez standardisée.

Pour la détection des courants de défaut alternatifs, les conducteurs du circuit à protéger, ou les conducteurs du réseau ou de la ligne d'alimentation de ce circuit, passent dans un tore de matériau ferromagnétique d'un transformateur dont les conducteurs précités forment le primaire et qui comporte un ou plusieurs enroulement(s) ou bobinage(s) secondaire(s). Le tore joue le rôle d'un concentrateur de flux magnétique. Ainsi en cas de fuite, se traduisant par un déséquilibre des courants d'entrée et de sortie dans les conducteurs des lignes à protéger, le flux créé dans le tore par ce déséquilibre au niveau du primaire, induit dans le bobinage secondaire une tension, constituant un signal de défaut.

Pour la détection des courants de défaut continus ou DC, il est par exemple connu d'exciter à saturation un tore magnétique doux, traversé par les conducteurs de la ligne ou du réseau, par un courant alternatif. Lors de l'apparition d'un courant de défaut DC dans les conducteurs, la symétrie de la saturation (sens positif/sens négatif) est rompue, la dissymétrie temporaire résultante étant proportionnelle au courant de défaut. Cette méthode dite "Fluxgate" peut ensuite prévoir d'exploiter directement le signal de défaut, ou son spectre fréquentiel.

Un autre principe de détection connu consiste à utiliser un transformateur de tension (par exemple un tore) doté d'un primaire (bobinage d'excitation) appliquant une tension fixe et un secondaire (bobinage de mesure) ayant un rapport de transformation variable, la valeur de ce dernier dépendant de l'intensité du courant de défaut qui traverse le tore et qui résulte de la somme algébrique des courants entrant et sortant.

Dans les deux types de détection de courants de défaut précités (alternatifs et continus), le signal de défaut est utilisé pour commander directement, ou à travers une électronique dédiée (étages de traitement des signaux), un actionneur ou analogue (par exemple de type relais). Ce dernier commande à son tour un mécanisme de déclenchement, de coupure ou d'ouverture associé, ou ceux d'autres appareils de protection de l'installation.

En lieu et place du tore précité, il peut aussi être prévu, en accord avec d'autres variantes connues de l'état de la technique, de mettre en œuvre d'autres types de capteurs ou de détecteurs aptes et destinés à générer un signal de défaut lorsqu'un défaut différentiel apparaît au niveau du réseau ou de l'installation surveillé(e).

Ces appareils ou dispositifs de protection différentielle peuvent présenter des caractéristiques variables. Ainsi, ils sont différentiables et caractérisés par leur sensibilité propre, qui dépend notamment du type d'installation électrique dans laquelle ils sont utilisés et qu'ils sont destinés à protéger. Par ailleurs, certains de ces appareils ne sont capables de détecter des fuites que pour des courants alternatifs (type AC) ou que pour des courants continus, alors que d'autres, plus complets, offrent des solutions également applicables au courant continu pulsé (types A et F) et lissé (type B).

Par ailleurs, pour les dispositifs ayant la capacité de détecter des courants de défaut alternatifs, la fréquence limite supérieure de détection constitue un autre critère de distinction entre les différents types : fréquences jusqu'à quelques dizaines de Hz : AC ; fréquences jusqu'à 1kHz : type F ; fréquences jusqu'à 1kHz : type B ; fréquences jusqu'à 20kHz : type B+.

Concernant plus particulièrement la détection des courants de défauts continus (DC), et notamment leur évaluation pour la détermination de l'occurrence ou non de conditions de déclenchement ou de coupure, plusieurs solutions techniques différentes sont actuellement mises en œuvre, qui toutes présentent des inconvénients notables.

En accord avec une première solution connue, on analyse les pics de courant traversant le tore de mesure pour réaliser le déclenchement sélectif.

En accord avec une seconde solution connue, on mesure la tension du tore et on détecte sa valeur crête, qui est ensuite comparée à une valeur seuil de déclenchement.

Dans les deux solutions précitées, ainsi que dans les autres solutions de protection différentielle connues les plus répandues pour la détection, dans une installation électrique, des courants de défaut continus au moins, les dispositifs mis en œuvre présentent généralement une construction de base et des composantes fonctionnelles similaires.

En effet, un tel dispositif connu, en relation avec les deux solutions précitées notamment, comprend typiquement au moins un module de détection et de commande qui est fonctionnellement actif ou opérationnel pour des fréquences du signal de défaut de 0Hz à quelques dizaines de Hz. Ce module est alimenté par le réseau et comprend, d'une part, un tore de mesure en un matériau ferromagnétique traversé par les conducteurs précités, d'autre part, un circuit d'excitation du tore comportant un générateur de signaux alternatifs produisant une porteuse périodique, et, enfin, un enroulement de mesure apte et destiné à générer un signal de défaut résultant de l'apparition d'un défaut différentiel au niveau du réseau. Cet enroulement de mesure est relié à des circuits de traitement et d'évaluation du signal de défaut et d'émission d'un signal de commande pour un moyen de coupure ou d'ouverture, faisant également partie du dispositif de protection différentielle, les circuits précités étant arrangés pour former une chaîne électronique opérationnelle appartenant au module de détection et de commande.

Dans certaines applications, des courants AC parasites se superposent au signal d'excitation et faussent par conséquent les conditions et le seuil de déclenchement DC : ils entraînent en effet une surmodulation du signal d'excitation. Ces courants AC perturbateurs peuvent, par exemple, provenir d'une opération de découpage (par exemple en relation avec un onduleur ou un variateur de vitesse), ou des harmoniques du réseau.

Au moins deux phénomènes néfastes peuvent résulter de la situation évoquée ci-dessus, à savoir : un risque de dépassement du seuil de fibrillation cardiaque en continu et un risque élevé de déclenchement intempestif, non justifié.

WO 2017/093670A1 divulgue un dispositif de protection différentielle présentant un chaîne opérationnelle comprenant successivement un circuit de traitement du signal, un circuit de conversion AC/DC, un circuit de filtrage et un circuit de prise de décision et de commande. Le circuit de filtrage n'est pas non plus adapté pour extraire du signal de défaut une porteuse périodique injectée par un circuit d'excitation dans le tore.

US 2004/145841 A1 divulgue un dispositif de protection différentielle présentant chaîne opérationnelle reliée à un enroulement secondaire d'un tore, cette chaîne comportant un circuit de filtrage passe-bas. Toutefois ce filtre n'est pas le premier circuit de la chaîne

La présente invention a pour but essentiel de surmonter l'inconvénient indiqué ci-dessus et d'éviter la situation précitée.

A cet effet, l'invention a pour objet un dispositif de protection différentielle du type évoqué précédemment, permettant la détection de courant de fuite ou de défaut dans une installation électrique alimentée soit par au moins deux conducteurs de phase d'un réseau, soit par au moins un conducteur de phase d'un réseau et par un conducteur de neutre dudit réseau, dispositif caractérisé en ce que ladite chaîne opérationnelle dudit module comprend un circuit de filtrage, du type passe-bas ou passe-bande, constituant le premier circuit de ladite chaîne et traitant le signal de défaut, ou un signal dérivé directement dépendant de ce dernier, pour en extraire la composante de signal correspondant sensiblement à la porteuse d'excitation.

L'invention sera mieux comprise, grâce à la description ci-après, qui se rapporte à des modes de réalisations préférés, donnés à titre d'exemples non limitatifs, et expliqués avec référence aux dessins schématiques annexés, dans lesquels :
les figures 1 à 3 sont des représentations schématiques de trois variantes de réalisation d'un dispositif de protection différentielle, du type B ou B+, comprenant un module de détection de courant de défaut DC et un module de détection de courant de défaut AC ;
les figures 4 à 6 sont des représentations schématiques partielles illustrant les modules de détection et de commande sensible aux courants de défaut DC (typiquement de 0 Hz à quelques dizaines de Hz) faisant partie des dispositifs des figures 1 à 3 respectivement ;
la figure 7 est une représentation électrique symbolique d'un exemple de circuit de filtrage pouvant faire partie d'un dispositif représenté sur l'une des figures 1 à 3 ;
les figures 8 et 9 sont des représentations graphiques (Courbes : seuil de déclenchement en mA en fonction de la fréquence) illustrant la variation de la sensibilité au déclenchement pour chacun des modules DC et AC (figure 8) et pour un dispositif tel que représenté sur les figures 1 à 3 (figure 9).

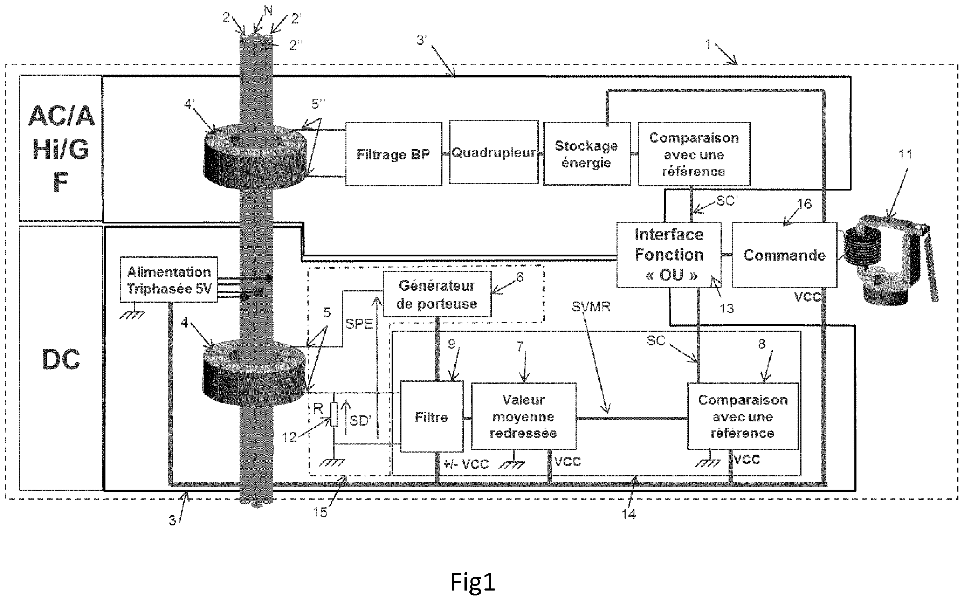

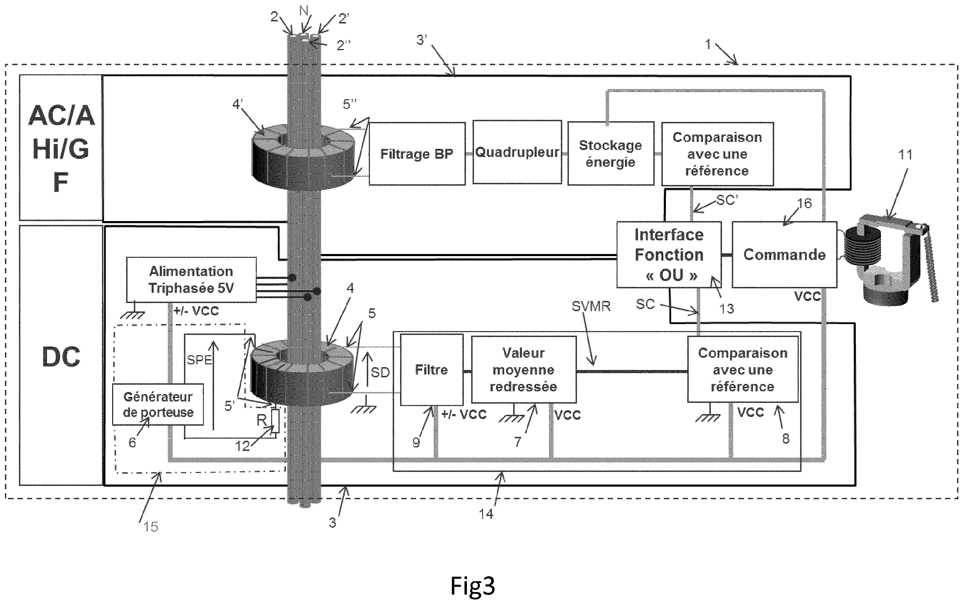

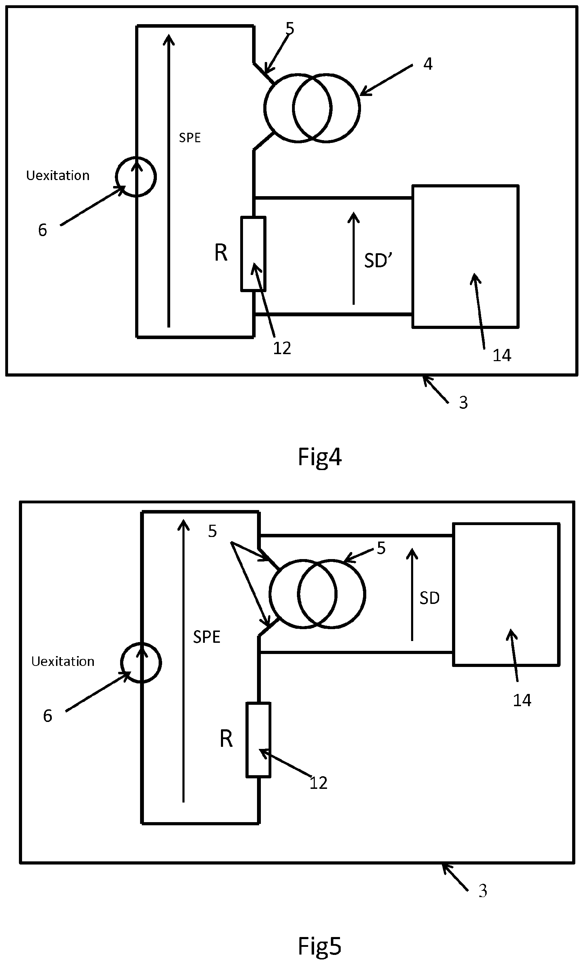

Les figures 1 à 3, et partiellement les figures 4 à 6, montrent un dispositif 1 de protection différentielle permettant la détection de courants de fuite ou de défaut dans une installation électrique alimentée soit par au moins deux conducteurs de phase d'un réseau 2, 2', 2", soit par au moins un conducteur de phase d'un réseau 2, 2', 2" et par un conducteur de neutre N dudit réseau.

Ce dispositif 1 comprend au moins un module 3 de détection et de commande qui est fonctionnellement actif ou opérationnel pour des fréquences du signal de défaut de 0Hz à quelques dizaines de Hz, ce module 3 étant alimenté par le réseau.

Ledit module 3 comprend, d'une part, un tore de mesure 4 en un matériau ferromagnétique traversé par les conducteurs précités 2, 2', 2", N, d'autre part, un circuit d'excitation 15 du tore 4 comportant un générateur de signaux alternatifs 6 produisant une porteuse périodique SPE, et, enfin, un enroulement de mesure 5 apte et destiné à générer un signal de défaut SD résultant de l'apparition d'un défaut différentiel au niveau du réseau, ledit enroulement de mesure 5 étant relié à des circuits 7, 8, 9, 10 de traitement et d'évaluation du signal de défaut SD et d'émission (sélective ou conditionnelle) d'un signal de commande SC pour un moyen 11 de coupure ou d'ouverture, faisant également partie du dispositif de protection différentielle 1, les circuits 7 à 10 précités formant les composantes d'une chaîne électronique opérationnelle 14 appartenant au module 3 de détection et de commande.

Le réseau d'alimentation 2, 2', 2", N peut être: un réseau triphasé avec neutre 2, 2', 2" et N ; un réseau triphasé sans neutre 2, 2' et 2" ; un réseau biphasé 2, 2' ou encore un réseau monophasé 2, N (2, 2', 2" : conducteurs de phase / N : neutre).

Conformément à l'invention, ladite chaîne opérationnelle 14 dudit module 3 comprend un circuit 9 de filtrage, du type passe-bas ou passe-bande, constituant le premier circuit de ladite chaîne 14 et traitant le signal de défaut SD, ou un signal dérivé SD' directement dépendant de ce dernier, pour en extraire la composante de signal correspondant sensiblement à la porteuse d'excitation SPE.

Le circuit de filtrage 9 peut être du type actif ou passif, ou encore comprendre des composants actifs (par exemple des amplificateurs opérationnels) et passifs (résistances, capacités, ...). De nombreuses réalisations de filtres convenant à la présente application sont connues de l'homme du métier.

Grâce à l'invention, il est donc possible de maîtriser précisément et fiablement la détection d'un courant de défaut DC même en cas de superposition d'une composante AC (par exemple liée à une fréquence de découpage d'un onduleur ou d'une alimentation à découpage). Ainsi, on peut dans ces cas également garantir la sécurité des biens et des personnes, tout en évitant des déclenchements non justifiés et simultanément la nécessité d'avoir à traiter une surmodulation du signal détecté.

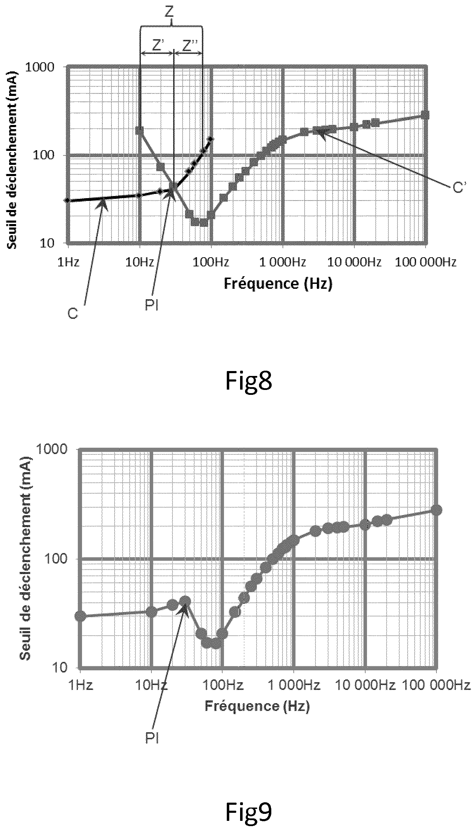

De plus, l'invention permet aussi de garantir que la bande passante de la détection DC (module 3 sur les figures 1 à 3) soit toujours supérieure à la bande passante de la détection AC (module 3' sur les figures 1 à 3) au-delà du point PI (cf. figures 8 et 9).

En accord avec une caractéristique très avantageuse de l'invention, il est prévu que les circuits 7 à 10 de la chaîne opérationnelle 14 du module 3 comprennent également, d'une part, au moins un circuit 7 fournissant un signal SVMR correspondant à la valeur moyenne redressée du signal de défaut SD, ou du signal dérivé SD' directement dépendant de ce dernier, et, d'autre part, un circuit 8 comparant ledit signal moyen redressé SVMR à une valeur seuil et délivrant conditionnellement ou sélectivement un signal de commande SC du moyen 11 de coupure ou d'ouverture, en fonction du résultat de ladite comparaison.

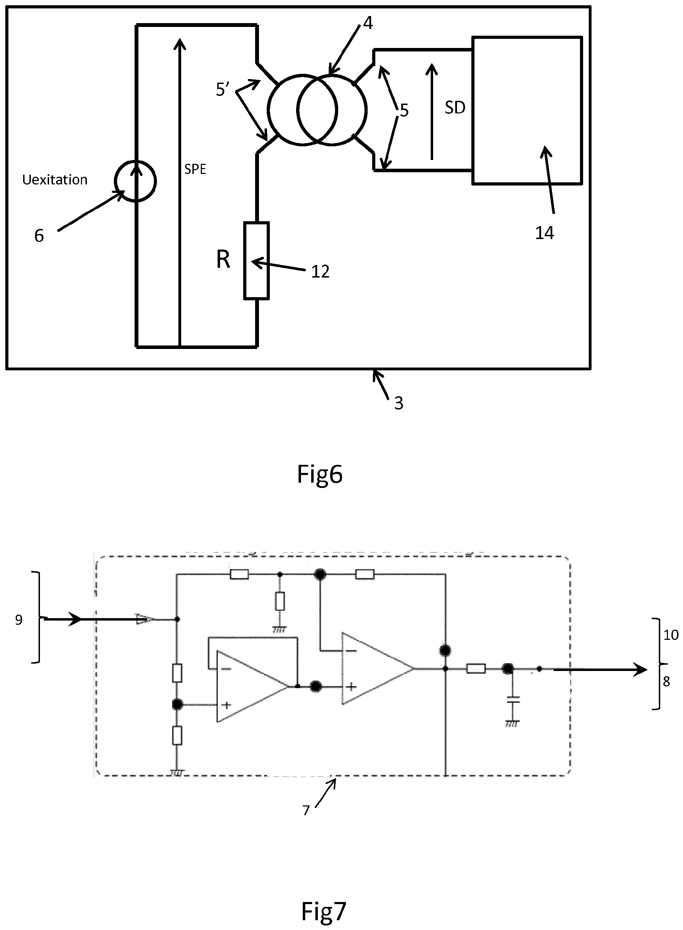

La figure 7 illustre un exemple de réalisation possible d'un circuit redresseur moyenneur 7.

D'autres types de circuits 7, de nature passive, tel qu'un pont de diodes, peuvent également être envisagés.

Grâce à cette caractéristique, simple à mettre en œuvre et autorisant l'exploitation de la tension moyenne redressée du signal de défaut, l'invention permet :
- de disposer et d'exploiter une image directe du flux (ou de l'induction) magnétique à travers le tore (reflétant sensiblement l'état magnétique de celui-ci) ;
- de linéariser la mesure de la composante continue du courant de défaut, et donc de pouvoir indiquer quantitativement, avec une gradation proportionnelle (série de diodes électroluminescentes), le niveau de courant différentiel mesuré ;
- du fait de l'absence de non linéarité, de mieux maîtriser les niveaux de déclenchement (suppression de la nécessité d'un réglage).

Selon une autre caractéristique avantageuse de l'invention, le circuit d'excitation 15 peut également comprendre au moins une résistance 12 montée en série avec le générateur 6 de la porteuse périodique d'excitation SPE, ledit signal d'excitation SPE étant appliqué au tore 4 par le biais soit de l'enroulement de mesure 5 en série avec ladite résistance 12, soit d'un enroulement additionnel 5' distinct, en série avec ladite résistance 12 et formant enroulement primaire par rapport à l'enroulement de mesure 5.

En prévoyant une telle résistance 12, il est possible, en ajustant sa valeur, de réaliser avec un même tore de mesure 4 un module 3 avec une sensibilité de déclenchement variable, par exemple entre 30 mA et 500 mA environ.

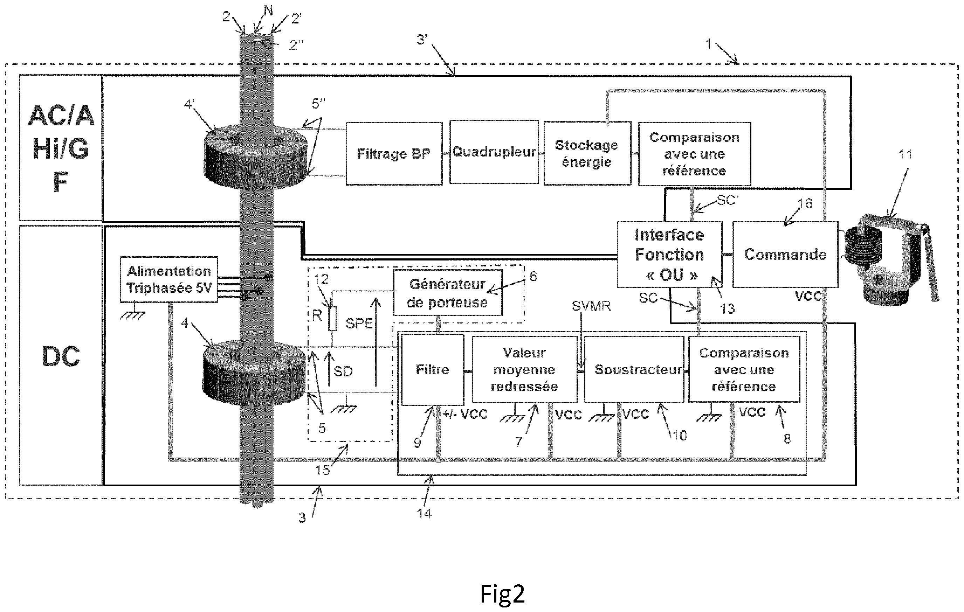

Conformément à un premier mode de réalisation ressortant des figures 2 et 5, il est prévu, lorsque le circuit de filtrage 9 du module 3 de détection et de commande est relié directement aux bornes de l'enroulement de mesure 5' et que ce dernier sert à l'application du signal d'excitation périodique SPE par l'intermédiaire d'une résistance en série 12, que la chaîne opérationnelle 14 dudit module 3 comprenne également un circuit soustracteur 10 monté entre le circuit 7 redresseur et moyenneur, d'une part, et le circuit 8 comparateur et fournisseur conditionnel du signal de commande SC, d'autre part.

Conformément à un second mode de réalisation illustré à titre d'exemple aux figures 1, 3, 4 et 6, il peut être prévu qu'une résistance 12 soit montée en série avec l'enroulement de mesure 5 et que le circuit de filtrage 9 du module 3 de détection et de commande soit alors alimenté par un signal SD' dérivé, prélevé aux bornes de ladite résistance 12.

Dans ce second mode de réalisation, il est possible de s'affranchir du circuit soustracteur 10 (construction plus simple, plus compacte et moins onéreuse).

Afin de fournir un dispositif 1 opérationnel sur une plage de fréquences plus étendue, intégrant également les courants de défaut de fréquence plus élevée, le dispositif 1 peut comprendre également un second module 3' de détection et de commande qui est fonctionnellement actif ou opérationnel pour des fréquences du signal de défaut de quelques dizaines de Hz à au moins 1 kHz, avantageusement jusqu'à au moins 20 kHz, et préférentiellement jusqu'à au moins 100 kHz, ce second module 3' étant autonome en termes d'alimentation, et en particulier non dépendant de la tension du réseau ou du secteur et délivrant conditionnellement son propre signal SC' de commande du moyen 11 de coupure ou d'ouverture. Ce second module 3' est alimenté par les signaux fournis par un enroulement de mesure 5" formant enroulement secondaire d'un second tore 4' lequel comporte un enroulement primaire formé par l'un au moins des conducteurs 2, 2', 2" d'alimentation et éventuellement le neutre N. Ces deux modules 3 et 3' sont séparés et arrangés de manière à constituer deux voies de détection, parallèles et mutuellement indépendantes, les domaines fréquentiels de fonctionnement opérationnel des deux modules 3 et 3' précités étant préférentiellement partiellement chevauchants.

Afin de mettre en concurrence les deux modules 3 et 3', tout en exploitant leur complémentarité et en garantissant une détection unique et sans faille sur toute la plage de fréquences résultant de l'association des deux plages de fréquence propres aux deux modules 3 et 3', chacun d'entre eux présente avantageusement un fonctionnement prépondérant par rapport à l'autre (des deux modules 3', 3) sur des parties mutuellement complémentaires du domaine fréquentiel total de courants de défaut couvert par ledit dispositif 1.

Comme le montrent les figures 1 à 3, les deux modules de détection et de commande 3 et 3' sont reliés, à leur sortie, par l'intermédiaire d'un circuit OU 13 à l'unique actionneur, relais ou moyen de coupure ou d'ouverture 11 du dispositif 1, le cas échéant par l'intermédiaire d'un étage de puissance 16.

Avantageusement, la zone de chevauchement Z des domaines fréquentiels de fonctionnement opérationnel des deux modules 3 et 3' est subdivisée en deux zones fréquentielles complémentaires Z' et Z" adjacentes, dans chacune desquelles l'un des deux modules 3, 3' présente respectivement une sensibilité et/ou une réactivité prépondérante, les sensibilités et/ou réactivités desdits modules 3, 3' étant réglées de telle manière que la valeur de la fréquence de passage d'une zone de prépondérance à l'autre est au plus égale à la valeur de la fréquence du réseau surveillé, préférentiellement inférieure à cette dernière.

Préférentiellement, les deux modules 3 et 3' fréquentiellement complémentaires sont configurés de telle manière que leurs courbes respectives C et C', de variation de la sensibilité en courant en fonction de la fréquence, présentent un point commun d'intersection PI, la valeur de la fréquence de ce point PI étant préférentiellement inférieure, et au plus égale à la valeur de la fréquence du réseau surveillé ou du secteur.

Comme l'illustrent à titre d'exemples les figures 1 à 3, le module 3' peut être du type AC/A, Hi/G ou F et comprendre une chaîne opérationnelle comportant notamment un circuit de filtrage à bande passante, un circuit quadrupleur, un circuit ou composant de stockage d'énergie et, enfin, un circuit de comparaison avec une référence.

Un dispositif 1 comprenant deux modules 3 et 3' en parallèle et en concurrence est par exemple connu du document WO 2017/093670 de la demanderesse.

Préférentiellement, le dispositif selon l'invention consiste en un dispositif de protection différentielle du type B ou B+ comprenant deux modules de détection indépendants 3 et 3' et fonctionnant en concurrence mutuelle.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif (1) de protection différentielle permettant la détection de courant de fuite ou de défaut dans une installation électrique alimentée soit par au moins deux conducteurs de phase d'un réseau (2, 2', 2", N), soit par au moins un conducteur de phase d'un réseau (2, 2', 2") et par un conducteur de neutre (N) dudit réseau,
ledit dispositif (1) comprenant au moins un module (3) de détection et de commande qui est fonctionnellement actif ou opérationnel pour des fréquences du signal de défaut de 0Hz à quelques dizaines de Hz, ce module (3) étant alimenté par le réseau,
ce module (3) comprenant, d'une part, un tore de mesure (4) en un matériau ferromagnétique traversé par les conducteurs précités (2, 2', 2", N), d'autre part, un circuit (15) d'excitation du tore (4) comportant un générateur de signaux alternatifs (6) produisant une porteuse périodique (SPE), et, enfin, un enroulement de mesure (5) apte et destiné à générer un signal de défaut (SD) résultant de l'apparition d'un défaut différentiel au niveau du réseau, ledit enroulement de mesure (5) étant relié à des circuits (7, 8, 9, 10) de traitement et d'évaluation du signal de défaut (SD) et d'émission d'un signal de commande (SC) pour un moyen (11) de coupure ou d'ouverture, faisant également partie du dispositif de protection différentielle (1), les circuits (7 à 10) précités étant arrangés pour former une chaîne électronique opérationnelle (14) appartenant au module (3) de détection et de commande,
dispositif (1) **caractérisé**
**en ce que** ladite chaîne opérationnelle (14) dudit module (3) comprend un circuit (9) de filtrage, du type passe-bas ou passe-bande, constituant le premier circuit de ladite chaîne (14) et traitant le signal de défaut (SD), ou un signal dérivé (SD') directement dépendant de ce dernier, pour en extraire la composante de signal correspondant sensiblement à la porteuse d'excitation (SPE).

2. Dispositif selon la revendication 1 **caractérisé en ce que** les circuits (7 à 10) de la chaîne opérationnelle (14) du module (3) comprennent également, d'une part, au moins un circuit (7) fournissant un signal (SVMR) correspondant à la valeur moyenne redressée du signal de défaut (SD), ou du signal dérivé (SD') directement dépendant de ce dernier, et, d'autre part,
un circuit (8) comparant ledit signal moyen redressé (SVMR) à une valeur seuil et délivrant conditionnellement ou sélectivement un signal de commande (SC) du moyen (11) de coupure ou d'ouverture, en fonction du résultat de ladite comparaison.

3. Dispositif selon la revendication 1 ou 2, **caractérisé en ce que** le circuit d'excitation (15) comprend également au moins une résistance (12) montée en série avec le générateur (6) de la porteuse périodique d'excitation (SPE), ledit signal d'excitation (SPE) étant appliqué au tore (4) par le biais soit de l'enroulement de mesure (5) en série avec ladite résistance (12), soit d'un enroulement additionnel (5') distinct, en série avec ladite résistance (12) et formant enroulement primaire par rapport à l'enroulement de mesure (5).

4. Dispositif selon l'une quelconque des revendications 1 à 3, **caractérisé en ce que**, lorsque le circuit de filtrage (9) du module (3) de détection et de commande est relié directement aux bornes de l'enroulement de mesure (5') et que ce dernier sert à l'application du signal d'excitation périodique (SPE) par l'intermédiaire d'une résistance en série (12), la chaîne opérationnelle (14) dudit module (3) comprend également un circuit soustracteur (10) monté entre le circuit (7) redresseur et moyenneur, d'une part, et le circuit (8) comparateur et fournisseur conditionnel du signal de commande (SC), d'autre part.

5. Dispositif selon l'une quelconque des revendications 1 à 3, **caractérisé en ce qu'**une résistance (12) est montée en série avec l'enroulement de mesure (5) et **en ce que** le circuit de filtrage (9) du module (3) de détection et de commande est alimenté par un signal (SD') dérivé, prélevé aux bornes de ladite résistance (12).

6. Dispositif selon l'une quelconque des revendications 1 à 5, **caractérisé en ce qu'**il comprend également un second module (3') de détection et de commande qui est fonctionnellement actif ou opérationnel pour des fréquences du signal de défaut de quelques dizaines de Hz à au moins 1 kHz, avantageusement jusqu'à au moins 20 kHz, et préférentiellement jusqu'à au moins 100 kHz, ce second module (3') étant autonome en termes d'alimentation, et en particulier non dépendant de la tension du réseau ou du secteur et délivrant conditionnellement son propre signal (SC') de commande du moyen (11) de coupure ou d'ouverture, **en ce que** ledit second module (3') est alimenté par les signaux fournis par un enroulement de mesure (5") formant enroulement secondaire d'un second tore (4') lequel comporte un enroulement primaire formé par l'un au moins des conducteurs (2, 2', 2") d'alimentation et éventuellement le neutre (N), et **en ce que** les deux modules (3 et 3') sont séparés et arrangés de manière à constituer deux voies de détection, parallèles et mutuellement indépendantes, les domaines fréquentiels de fonctionnement opérationnel des deux modules (3 et 3') précités étant préférentiellement partiellement chevauchants.

7. Dispositif selon la revendication 6, **caractérisé en ce que** chacun des modules (3 et 3') présente un fonctionnement prépondérant par rapport à l'autre des deux modules (3', 3) sur des parties mutuellement complémentaires du domaine fréquentiel total de courants de défaut couvert par ledit dispositif (1).

8. Dispositif selon l'une quelconque des revendications 6 et 7, **caractérisé en ce que** les deux modules de détection et de commande (3 et 3') sont reliés, à leur sortie, par l'intermédiaire d'un circuit OU (13) à l'unique actionneur, relais ou moyen de coupure ou d'ouverture (11) du dispositif (1).

9. Dispositif selon l'une quelconque des revendications 6 à 8, **caractérisé en ce que** la zone de chevauchement (Z) des domaines fréquentiels de fonctionnement opérationnel des deux modules (3 et 3') est subdivisée en deux zones fréquentielles complémentaires (Z' et Z") adjacentes, dans chacune desquelles l'un des deux modules (3, 3') présente respectivement une sensibilité et/ou une réactivité prépondérante, les sensibilités et/ou réactivités desdits modules (3, 3') étant réglées de telle manière que la valeur de la fréquence de passage d'une zone de prépondérance à l'autre est au plus égale à la valeur de la fréquence du réseau surveillé, préférentiellement inférieure à cette dernière.

10. Dispositif selon l'une quelconque des revendications 6 à 9, **caractérisé en ce que** les deux modules (3 et 3') fréquentiellement complémentaires sont configurés de telle manière que leurs courbes respectives (C et C'), de variation de la sensibilité en courant en fonction de la fréquence, présentent un point commun d'intersection (PI), la valeur de la fréquence de ce point (PI) étant préférentiellement inférieure, et au plus égale à la valeur de la fréquence du réseau surveillé ou du secteur.

11. Dispositif selon l'une quelconque des revendications 1 à 10, **caractérisé en ce qu'**il consiste en un dispositif de protection différentielle du type B ou B+ comprenant deux modules de détection indépendants (3 et 3') et fonctionnant en concurrence mutuelle.

## Patentansprüche

1. Differenzialschutzvorrichtung (1), die die Erfassung von Leckstrom oder Fehlerstrom in einer elektrischen Anlage erlaubt, die entweder von mindestens zwei Phasenleitern eines Netzes (2, 2', 2", N) oder von mindestens einem Phasenleiter eines Netzes (2, 2', 2") und von einem Nullleiter (N) des Netzes gespeist wird, wobei die Vorrichtung (1) mindestens ein Erfassungs- und Steuermodul (3) enthält, das funktionell aktiv oder funktionsfähig ist für Frequenzen des Fehlersignals von 0Hz bis zu einigen zehn Hz, wobei dieses Modul (3) vom Netz gespeist wird,
wobei dieses Modul (3) einerseits einen Messringkern (4) aus einem ferromagnetischen Material, der von den erwähnten Leitern (2, 2', 2", N) durchquert wird, andererseits eine Erregerschaltung (15) des Ringkerns (4), die einen Wechselsignalgenerator (6) aufweist, der einen periodischen Träger (SPE) erzeugt, und schließlich eine Messwicklung (5) enthält, die geeignet und dazu bestimmt ist, ein Fehlersignal (SD) zu erzeugen, das aus dem Auftreten eines Differenzialfehlers im Bereich des Netzes resultiert, wobei die Messwicklung (5) mit Schaltungen (7, 8, 9, 10) zur Verarbeitung und zur Auswertung des Fehlersignals (SD) und zum Senden eines Steuersignals (SC) für eine Abschalt- oder Öffnungseinrichtung (11) verbunden ist, die ebenfalls Teil der Differenzialschutzvorrichtung (1) ist, wobei die erwähnten Schaltungen (7 bis 10) eingerichtet sind, um eine funktionsfähige Elektronikkette (14) zu bilden, die zum Erfassungs- und Steuermodul (3) gehört,
wobei die Vorrichtung (1) **dadurch gekennzeichnet ist, dass** die funktionsfähige Kette (14) des Moduls (3) eine Filterschaltung (9) vom Tiefpass-Typ oder Bandpass-Typ enthält, die die erste Schaltung der Kette (14) bildet und das Fehlersignal (SD) oder ein direkt von letzterem abhängendes abgeleitetes Signal (SD') verarbeitet, um daraus die Signalkomponente zu entnehmen, die im Wesentlichen dem Anregungsträger (SPE) entspricht.

2. Vorrichtung nach Anspruch 1, **dadurch gekennzeichnet, dass** die Schaltungen (7 bis 10) der funktionsfähigen Kette (14) des Moduls (3) ebenfalls einerseits mindestens eine Schaltung (7), die ein Signal (SVMR) liefert, das dem gleichgerichteten Mittelwert des Fehlersignals (SD) oder des direkt von diesem letzteren abhängenden abgeleiteten Signals (SD') entspricht, und andererseits
eine Schaltung (8) enthalten, die das gleichgerichtete mittlere Signal (SVMR) mit einem Schwellwert vergleicht und bedingt oder selektiv ein Steuersignal (SC) der Abschalt- oder Öffnungseinrichtung (11) abhängig vom Ergebnis des Vergleichs liefert.

3. Vorrichtung nach Anspruch 1 oder 2, **dadurch gekennzeichnet, dass** die Anregungsschaltung (15) ebenfalls mindestens einen Widerstand (12) enthält, der mit dem Generator (6) des periodischen Anregungsträgers (SPE) in Reihe geschaltet ist, wobei das Anregungssignal (SPE) an den Ringkern (4) entweder mittels der Messwicklung (5) in Reihe mit dem Widerstand (12) oder mittels einer unterschiedlichen zusätzlichen Wicklung (5') in Reihe mit dem Widerstand (12) und eine Primärwicklung bezüglich der Messwicklung (5) bildend angelegt wird.

4. Vorrichtung nach einem der Ansprüche 1 bis 3, **dadurch gekennzeichnet, dass**, wenn die Filterschaltung (9) des Erfassungs- und Steuermoduls (3) direkt mit den Klemmen der Messwicklung (5') verbunden ist und letztere zum Anlegen des periodischen Anregungssignals (SPE) mittels eines Reihenwiderstands (12) dient, die funktionsfähige Kette (14) des Moduls (3) ebenfalls eine Subtrahierschaltung (10) enthält, die zwischen die Gleichrichter- und Mittelungsschaltung (7) einerseits und die Vergleichs- und bedingte Lieferschaltung (8) des Steuersignals (SC) andererseits montiert ist.

5. Vorrichtung nach einem der Ansprüche 1 bis 3, **dadurch gekennzeichnet, dass** ein Widerstand (12) mit der Messwicklung (5) in Reihe geschaltet ist, und dass die Filterschaltung (9) des Erfassungs- und Steuermoduls (3) mit einem abgeleiteten Signal (SD') gespeist wird, das an den Klemmen des Widerstands (12) entnommen wird.

6. Vorrichtung nach einem der Ansprüche 1 bis 5, **dadurch gekennzeichnet, dass** sie ebenfalls ein zweites Erfassungs- und Steuermodul (3') enthält, das funktionell aktiv oder funktionsfähig ist für Frequenzen des Fehlersignals von einigen zehn Hz bis mindestens ein 1 kHz, vorteilhafterweise bis mindestens 20 kHz, und vorzugsweise bis mindestens 100 kHz, wobei dieses zweite Modul (3') bezüglich der Speisung autonom ist und insbesondere nicht von der Spannung des Netzes oder des Stromnetzes abhängt und bedingt sein eigenes Steuersignal (SC') der Abschalt- oder Öffnungseinrichtung (11) liefert, dass das zweite Modul (3') mit den von einer Messwicklung (5"), die eine Sekundärwicklung eines zweiten Ringkerns (4') bildet, der eine Primärwicklung aufweist, die von mindestens einem der Speiseleiter (2, 2', 2") und ggf. dem Nullleiter (N) gebildet wird, gelieferten Signalen gespeist wird, und dass die zwei Module (3 und 3') getrennt und so eingerichtet sind, dass sie zwei parallele und voneinander unabhängige Erfassungswege bilden, wobei die Frequenzbereiche des Funktionsbetriebs der zwei erwähnten Module (3 und 3') vorzugsweise teilweise überlappend ist.

7. Vorrichtung nach Anspruch 6, **dadurch gekennzeichnet, dass** jedes der Module (3 und 3') über gegenseitig komplementäre Teile des Gesamtfrequenzbereichs von Fehlerströmen, der von der Vorrichtung (1) abgedeckt wird, einen Betrieb aufweist, der bezüglich des anderen der zwei Module (3', 3) präponderant ist.

8. Vorrichtung nach einem der Ansprüche 6 und 7, **dadurch gekennzeichnet, dass** die zwei Erfassungs- und Steuermodule (3 und 3') an ihrem Ausgang mittels einer ODER-Schaltung (13) mit dem einzigen Stellglied, Relais oder Abschalt- oder Öffnungseinrichtung (11) der Vorrichtung (1) verbunden sind.

9. Vorrichtung nach einem der Ansprüche 6 bis 8, **dadurch gekennzeichnet, dass** die Überlappungszone (Z) der Frequenzbereiche des Funktionsbetriebs der zwei Module (3 und 3') in zwei komplementäre benachbarte Frequenzzonen (Z' und Z") unterteilt ist, in jeder von denen eines der zwei Module (3, 3') eine präponderante Empfindlichkeit und/oder Reaktivität aufweist, wobei die Empfindlichkeiten und/oder Reaktivitäten der Module (3, 3') so eingestellt sind, dass der Wert der Durchgangsfrequenz von einer Präponderanzzone zur anderen höchstens gleich dem Wert der Frequenz des überwachten Netzes, vorzugsweise niedriger als letztere ist.

10. Vorrichtung nach einem der Ansprüche 6 bis 9, **dadurch gekennzeichnet, dass** die zwei frequenzmäßig komplementären Module (3 und 3') so konfiguriert sind, dass ihre jeweiligen Kurven (C und C') der Änderung der Stromempfindlichkeit abhängig von der Frequenz einen gemeinsamen Schnittpunkt (PI) aufweisen, wobei der Wert der Frequenz dieses Punkts (PI) vorzugsweise niedriger als die und höchstens gleich der Frequenz des überwachten Netzes oder des Stromnetzes ist.

11. Vorrichtung nach einem der Ansprüche 1 bis 10, **dadurch gekennzeichnet, dass** sie aus einer Differenzialschutzvorrichtung des Typs B oder B+ besteht, die zwei Erfassungsmodule (3 und 3') enthält, die unabhängig sind und in gegenseitiger Konkurrenz arbeiten.

## Claims

1. Differential protection device (1) which makes it possible to detect a leakage or fault current in an electrical apparatus which is supplied with power either by at least two phase conductors (2, 2', 2", N) of a network or by at least one phase conductor (2, 2', 2") of a network and by a neutral conductor (N) of said network,
said device (1) comprising at least one detection and control module (3) which is functionally active or operational for frequencies of the fault signal from 0 Hz to a few tens of Hz, this module (3) being supplied with power by the network,
this module (3) comprising, on the one hand, a measurement torus (4) made of a ferromagnetic material which the aforementioned conductors (2, 2', 2", N) pass through, on the other hand, an excitation circuit (15) for exciting the torus (4) which comprises an AC signal generator (6) which produces a periodic carrier (SPE) and, finally, a measurement winding (5) which is able and intended to generate a fault signal (SD) which results from the appearance of a differential fault in the network, said measurement winding (5) being connected to circuits (7, 8, 9, 10) for processing and evaluating the fault signal (SD) and for transmitting a control signal (SC) for a breaking or opening means (11), which also forms part of the differential protection device (1), the aforementioned circuits (7 to 10) being arranged to form an operational electronic chain (14) which belongs to the detection and control module (3),
which device (1) is **characterized**
**in that** said operational chain (14) of said module (3) comprises a low-pass or band-pass filtering circuit (9), which forms the first circuit of said chain (14) and processes the fault signal (SD), or a derived signal (SD') which is directly dependent thereon, in order to extract therefrom the signal component which substantially corresponds to the excitation carrier (SPE) .

2. Device according to Claim 1, **characterized in that** the circuits (7 to 10) of the operational chain (14) of the module (3) also comprise, on the one hand, at least one circuit (7) which delivers a signal (SVMR) which corresponds to the rectified average value of the fault signal (SD), or of the derived signal (SD') which is directly dependent thereon, and, on the other hand,
a circuit (8) which compares said rectified average signal (SVMR) with a threshold value and conditionally or selectively delivers a control signal (SC) for controlling the breaking or opening means (11), depending on the result of said comparison.

3. Device according to Claim 1 or 2, **characterized in that** the excitation circuit (15) also comprises at least one resistor (12) connected in series with the generator (6) of the periodic excitation carrier (SPE), said excitation signal (SPE) being applied to the torus (4) via either the measurement winding (5) in series with said resistor (12) or a distinct additional winding (5'), which is in series with said resistor (12) and forms a primary winding with respect to the measurement winding (5) .

4. Device according to any one of Claims 1 to 3, **characterized in that**, when the filtering circuit (9) of the detection and control module (3) is connected directly to the terminals of the measurement winding (5') and when the latter serves for the application of the periodic excitation signal (SPE) via a series resistor (12), the operational chain (14) of said module (3) also comprises a subtractor circuit (10) connected between the rectifying and averaging circuit (7), on the one hand, and the comparator circuit (8) which conditionally delivers the control signal (SC), on the other hand.

5. Device according to any one of Claims 1 to 3, **characterized in that** a resistor (12) is connected in series with the measurement winding (5) and **in that** the filtering circuit (9) of the detection and control module (3) is supplied with power by a derived signal (SD') which is drawn from the terminals of said resistor (12).

6. Device according to any one of Claims 1 to 5, **characterized in that** it also comprises a second detection and control module (3') which is functionally active or operational for frequencies of the fault signal from a few tens of Hz to at least 1 kHz, advantageously up to at least 20 kHz, and preferably up to at least 100 kHz, this second module (3') being autonomous in terms of power supply, and in particular not dependent on the voltage of the network or of the mains and conditionally delivering its own control signal (SC') for controlling the breaking or opening means (11), **in that** said second module (3') is supplied with power by the signals delivered by a measurement winding (5") which forms a secondary winding of a second torus (4') which comprises a primary winding formed by at least one of the power supply conductors (2, 2', 2") and possibly the neutral (N), and **in that** the two modules (3 and 3') are separate and arranged so as to form two detection channels, which are parallel and mutually independent, the frequency ranges of functional operation of the aforementioned two modules (3 and 3') preferably overlapping partially.

7. Device according to Claim 6, **characterized in that** each of the modules (3 and 3') exhibits predominant operation with respect to the other of the two modules (3', 3) in mutually complementary portions of the total fault-current frequency range covered by said device (1).

8. Device according to either one of Claims 6 and 7, **characterized in that** the two detection and control modules (3 and 3') are connected, at their output, via an OR circuit (13) to the single actuator, relay or breaking or opening means (11) of the device (1).

9. Device according to any one of Claims 6 to 8, **characterized in that** the overlapping region (Z) of the frequency ranges of functional operation of the two modules (3 and 3') is subdivided into two adjacent complementary frequency regions (Z' and Z"), in each of which one of the two modules (3, 3') exhibits predominant sensitivity and/or reactivity, respectively, the sensitivities and/or reactivities of said modules (3, 3') being set in such a way that the value of the frequency of transition from one predominant region to the other is at most equal to the value of the frequency of the monitored network, preferably lower than the latter frequency.

10. Device according to any one of Claims 6 to 9, **characterized in that** the two modules (3 and 3'), which are complementary in terms of frequency, are configured in such a way that their respective curves (C and C') of variation in sensitivity in terms of current as a function of frequency exhibit a shared intersection point (PI), the value of the frequency of this point (PI) preferably being lower than, and at most equal to, the value of the frequency of the monitored network or of the mains.

11. Device according to any one of Claims 1 to 10, **characterized in that** it consists of a type B or B+ differential protection device which comprises two detection modules (3 and 3') which are independent and operate in mutual competition.
